# EUROPEAN PATENT SPECIFICATION

(11) **EP 4 070 624 B1**
(45) Date of publication and mention of the grant of the patent: **07.02.2024**
(21) Application number: 20829650.9
(22) Date of filing: 03.12.2020
(51) Int. Cl.: H05B 3/28, H05B 3/50, H05B 3/82, F24H 3/04, F24H 9/1818, F24H 9/1863

(54) **ELECTRIC HEATER FOR HEATING A SUBSTANCE IN A MOTOR VEHICLE**
ELEKTRISCHE HEIZVORRICHTUNG ZUM ERWÄRMEN EINER SUBSTANZ IN EINEM KRAFTFAHRZEUG
DISPOSITIF DE CHAUFFAGE ÉLECTRIQUE POUR LE CHAUFFAGE D'UNE SUBSTANCE DANS UN VÉHICULE AUTOMOBILE

(30) Priority: 03.12.2019 IT 201900022797
(43) Date of publication of application: 12.10.2022
(73) Proprietor: I.R.C.A. S.p.a. Industria Resistenze Corazzate e Affini, 31029 Vittorio Veneto (IT)
(72) Inventor: EUSEBIO, Mario, 33170 Pordenone (IT); DEI TOS, Andrea, 31029 Vittorio Veneto (IT); ZOPPAS, Federico, 31100 Treviso (IT)
(74) Representative: de Alteriis, Renato
(86) International application number: PCT/IB2020/061425
(87) International publication number: WO 2021/111348

(56) References cited:
- EP-A1- 1 398 996
- EP-A1- 2 053 902
- EP-A1- 2 860 228
- DE-A1-102012 107 985
- DE-A1-102018 100 742
- US-A1- 2015 117 846
- US-A1- 2015 319 807
- US-A1- 2018 065 447

## Description

### Field of the invention

The present invention relates to the field of electric heaters for heating a liquid or frozen substance in a motor vehicle, in particular, for heating electric car batteries or an HVAC system or for a system for reducing the environmental pollution of the motor vehicle.

The electric heater is particularly adapted to heat water, a solution of water and urea, or a solution of water and ethylene glycol.

### Background art

To heat a liquid or frozen substance in a motor vehicle, heaters may be used, provided with a heating element which generates heat by means of the Joule effect.

One of the main issues encountered in these applications is the adequate insulation between the heating element and the liquid, which must not come into contact with the heating element.

Another issue concerns the compatibility of the materials with which the electric heater is made with the liquid to be heated.

Such issue occurs, in particular, when the liquid is a solution of water and urea or a solution of water and ethylene glycol. Indeed, many materials, in particular polymeric ones, degrade when they come into contact with such solutions. It is therefore necessary to select and use suitable materials, which often have a high cost.

The need is therefore felt for an electric heater whose heating element is adequately insulated from the liquid to be heated, and which is made of materials compatible with the liquid.

The need is also felt to optimize the heating of the substance, in particular when it is frozen, in particular in the solid state.

Documents EP1398996A1, EP2053902A1, DE102012107985A1, US2018/065447A1, US2015/117846A1, US2015/319807A1, EP2860228A1, DE102018100742A1 are useful for understanding of the invention disclosed herein.

### Summary of the invention

It is an object of the present invention to produce an electric heater for heating a liquid, or a frozen substance, in particular in the solid state, in a motor vehicle, the heating element of which being adequately insulated from the substance, for example, from the liquid to be heated, and being made of materials compatible with the substance (for example, the liquid), and at the same time allowing an efficient heating, even of a frozen substance, and being also producible at low cost.

In this context, it is an object of the invention to produce an electric heater which also has a compact size.

The present invention achieves at least one of such objects, and other objects which will be apparent in light of the present description, by means of an electric heater according to claim 1.

Advantageously, the metal layers sealed to each other prevent the substance, for example the liquid, to be heated from coming into contact with the polymeric layers and with the metal sheet.

Therefore, advantageously, it is not necessary to select and use polymeric layers which are compatible with the substance, for example with the liquid. Advantageously, each metal layer intended to come into contact with the liquid is provided, in all embodiments, with an external coating, or protective coating, or coating layer.

The coating confers a better chemical resistance to the metal layer, which is protected from unwanted chemical interactions with the substance, for example, with the liquid, which may be, for example, water, a solution of water and urea or a solution of water and ethylene glycol.

The coating allows to expand the range of usable metal materials. The metal layer may, in fact, be coated with the most suitable coating according to the specific substance, for example, the specific liquid, to be heated.

Advantageously, the aforesaid flaps allow a better transmission of the heat to the substance to be heated in a motor vehicle. The flaps are particularly useful when the substance is frozen, in particular, in solid form, since they penetrate the frozen mass, i.e., they may be included in the frozen substance.

Therefore, a heater is obtained which allows to optimize the heat transmission, allowing in particular to improve the thawing of a substance, and wherein the polymeric layers and the metal sheet are suitably protected by the substance to be heated.

Advantageously, the heating metal sheet, or heating track, may be optionally provided with at least one PTC layer (PTC, Positive Temperature Coefficient) , i.e., the resistivity of which increases with the increase of the temperature. Thereby, it is substantially obtained a self-regulation of the temperature of the metal sheet, and therefore unwanted overheating of the polymeric layers is avoided. Therefore, the range of usable polymeric materials may be expanded.

It is preferable to weld the metal layers to each other by means of laser welding. Laser welding is particularly advantageous, since it may be performed quickly and may be performed at relatively low temperatures and is therefore compatible with materials such as Aluminum. In particular, laser welding allows not to deform the metal layers which may also be made with thin thickness.

Furthermore, laser welding allows to avoid unwanted overheating of the polymeric layers arranged between the two metal layers.

The invention also relates to a device according to claim 9.

The invention also relates to a process according to claim 12.

In a particularly advantageous example, the electric heater can be arranged as a divider in the body of the aforesaid device.

Thereby, there is an optimization of the heat transmission between the electric heater and the substance, for example, the liquid, since most of the external surface of the electric heater may come into contact with the substance, for example, the liquid, while only a small part is in contact with the body of the device.

The device may advantageously have a small size, for example, it may have an internal volume, in particular for the liquid, from 0.5 to 5 liters. The internal volume may however be, for example, from 0.5 to 30 liters, preferably from 0.5 to 5 liters or from 12 to 24 liters.

For example, the device may advantageously be used for heating batteries in electric cars or for the HVAC system.

For example, the device may be inserted inside the cooling circuit of the motor vehicle, so as not to have to add an additional heat exchange tank.

For example, the device may be used for heating a solution of water and urea or of water and ethylene glycol.

In the present description, "liquid or frozen substance" means, in particular, a liquid which may be subject to freezing and thawing.

Further features and advantages of the invention will become more apparent in light of the detailed description of non-exclusive example embodiments.

The dependent claims describe particular embodiments of the invention.

### Brief description of the Figures

In the description of the invention, reference is made to the accompanying drawings, which are provided by way of non-limiting example, in which:
Figure 1 diagrammatically shows a section of an example of electric heater in accordance with the invention, in which some optional components are not shown;
Figure 2 shows an enlarged detail of Figure 1;
Figure 2A shows a detail of an optional feature of an electric heater in accordance with the invention;
Figure 3 diagrammatically shows a section of a particular example of an electric heater according to the invention;
Figure 4 shows a perspective view of an electric heater according to the example of Figure 3;
Figure 5 shows a perspective view of a device in accordance with the invention;
Figure 6 shows a perspective view of a component of the device of Figure 5;
Figure 7 diagrammatically shows a sectional view of an example of device in accordance with Figure 5;
Figure 8 diagrammatically shows a sectional view of another example of device in accordance with Figure 5.

The same elements, or functionally equivalent elements, have the same reference numeral in the Figures.

### Description of embodiments of the invention

With reference to the Figures, example embodiments of an electric heater 1, 1' in accordance with the invention are described. The electric heater 1, 1' is adapted to be arranged in the tank or another device adapted to receive a liquid of a motor vehicle (such as, for example, a car, van or truck). The electric heater 1, 1' is adapted to heat a liquid or frozen substance in a motor vehicle, in particular for heating electric car batteries; or for a Heating, Ventilation and Air Conditioning (HVAC) system; or for a system for reducing the environmental pollution of the motor vehicle. The electric heater 1, 1' is also adapted to be arranged in a tank containing a substance for cleaning parts of the motor vehicle, for example, the windshield, the headlights or one or more sensors.

The electric heater 1, 1' is particularly adapted to heat water or an aqueous solution, for example, a solution of water and ethylene glycol or a solution of water and urea, such as, for example, the AdBlue^{®} solution.

In all embodiments, the electric heater 1, 1' comprises:
- a metal sheet 2, or heating sheet, adapted to be connected to a source of electricity to generate heat when it is crossed by an electric current;
- two polymeric layers 3, 4 between which the metal sheet 2 is arranged;
- two metal layers 5, 6, between which the two polymeric layers 3, 4 are arranged; wherein the two metal layers 5, 6 are hermetically sealed to each other, defining a casing which prevents the liquid, or the frozen substance, to be heated from coming into contact with the two polymeric layers 3, 4 and with the metal sheet 2. The two metal layers 5, 6, the two polymeric layers 3, 4 and the metal sheet 2 substantially define a sandwich structure.

Preferably, the two polymeric layers 3, 4 and/or the two metal layers 5, 6 are substantially flat.

Preferably, the metal sheet 2 adheres to the two polymeric layers 3, 4; and/or each polymeric layer 3, 4 adheres to a respective metal layer 5, 6.

The metal sheet 2, in particular, defines a heating track or path, for example, a track comprising one or more serpentine portions.

The metal sheet 2 may be made, for example, of a material comprising or consisting of steel, aluminum or copper.

Preferably, the metal sheet 2 has a thickness of from 5 to 100 µm (micrometers). Optionally, at least one surface of the metal sheet 2 is coated with an electrically conductive layer having a positive temperature coefficient, also called Positive Temperature Coefficient (PTC) layer, not shown. The PTC layer may be formed, for example, by a conductive ink. The PTC layer may, for example, have a thickness of from 5 to 50 µm (micrometers).

The PTC layer is preferably in direct contact with the metal sheet 2.

Preferably, 50% to 90% of the surface, in particular, of the total surface, of the metal sheet is coated with the PTC layer.

The PTC layer allows for a temperature regulation of the metal sheet 2, so that performance safety may be ensured, and unwanted overheating is avoided.

The two polymeric layers 3, 4 may be made, for example, of a material comprising or consisting of PET (Polyethylene terephthalate), silicone, Polyimide (for example, Kapton), PEN (Polyethylene naphthalate) or PP (Polypropylene). Preferably, each polymeric layer 3, 4 has a thickness of from 0.05 to 4 mm. Preferably, each polymeric layer 3, 4 is a double-sided adhesive layer, i.e., it is provided with two faces opposite to each other having adhesive properties. Thereby, each polymeric layer 3, 4 may adhere on one side to the metal sheet 2 and on the opposite side to a respective metal layer 5, 6.

Optionally, the metal sheet 2 is also sealed between the two polymeric layers 3, 4, in particular, so that a liquid may not penetrate inside the two polymeric layers 3, 4 and therefore preventing a liquid from coming into contact with the metal sheet 2. An additional protection of the metal sheet 2, from a contact with the substance to be heated, is therefore provided.

Preferably, the two metal layers 5, 6 are made of a material comprising or consisting of Aluminum or Copper, since they are excellent heat conductors. Reference 61 indicates the surface or face of the metal layer 6 distal from the polymeric layer 4, also called external face 61.

Reference 51 indicates the surface or face of the metal layer 5 distal from the polymeric layer 3, also called external face 51.

In particular, the external face 61 is one of the two surfaces, opposite to each other, with greatest extension of the metal layer 6.

In particular, the external face 51 is one of the two surfaces, opposite to each other, with greatest extension of the metal layer 5.

The metal layers 5, 6 are advantageously adapted to transmit the heat generated by the metal sheet 2 to the substance to be heated, for example, to the liquid to be heated or to a substance to be thawed.

Furthermore, the metal layers 5, 6 are advantageously adapted to prevent the substance, for example, the liquid, to be heated from coming into contact with the polymeric layers 3, 4 and with the metal sheet 2.

Indeed, the solutions of water and ethylene glycol and the solutions of water and urea may damage the polymeric layers 3, 4, which are therefore protected by the metal layers 5, 6.

In all the embodiments, at least one of the two metal layers 5, 6 is provided with an external coating, or coating layer.

In particular, the metal layer 5 and/or the metal layer 6 can be provided with the external coating, or, in other words, with a respective external coating layer.

More in detail, the external face 51 of the metal layer 5 is provided with the external coating, and/or the external face 61 of the metal layer 6 is provided with the external coating.

Preferably, when provided, the external coating (or coating layer) of the external face 51 substantially covers the entire external face 51.

Preferably, when provided, the external coating (or coating layer) of the external face 61 substantially covers the entire external face 61.

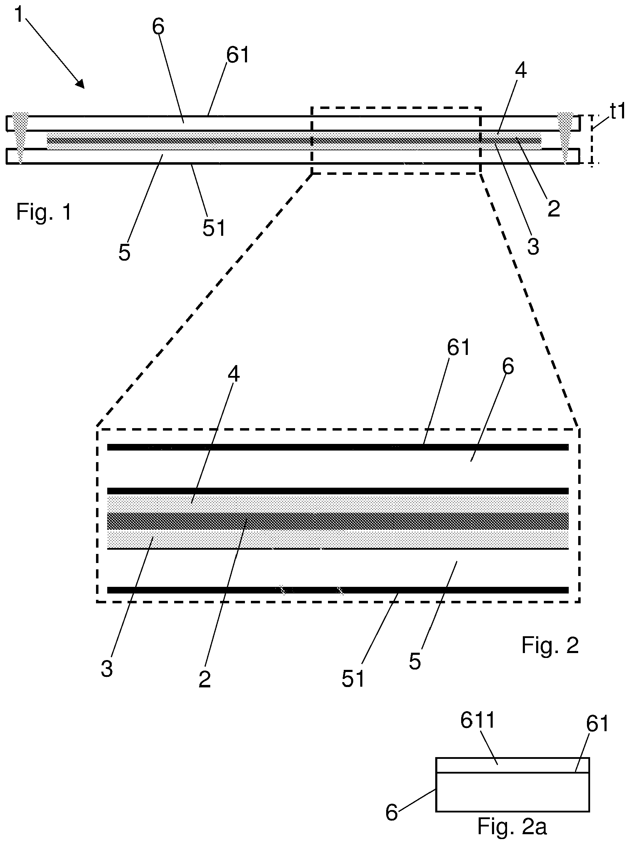

Exclusively by way of example and not by way of limitation, Figure 2a diagrammatically shows the external coating 611 on the metal layer 6.

The external coating is made of a material which is different with respect to the metal layers 5, 6, and is, in particular, adapted to protect the metal layer from a chemical interaction with the liquid to be heated.

The external coating is advantageously used to avoid the substance, for example the liquid, in particular the solutions of water and ethylene glycol and the solutions of water and urea, from damaging the metal layers 5, 6.

Depending on which metal layers are intended to come into contact with the liquid, only one of the two metal layers or both metal layers 5, 6 may be coated.

Note that the metal layers 5, 6, and, when provided, the respective coating, are preferably the outermost elements of the electric heater 1, 1'.

The external coating is advantageously made of a material comprising or consisting of PTFE (polytetrafluoroethylene). PTFE, in particular, is non-elastomeric, more in particular, it is not a fluoroelastomeric polymer. PTFE is particularly advantageous, in particular with respect to a fluoroelastomeric polymer, in particular, because it can be used to make a thin coating.

By means of the coating, being compatible with the substance, it is possible to optionally use metallic materials, coated with said coating, which are not compatible or less compatible with the substance, and therefore cheaper.

The external coating has a thickness of from 3 to 50 µm (micrometers).

It is particularly advantageous to have such a thin thickness, since it allows to save material.

Said thickness is preferably measured along an axis perpendicular to the external face 51, 61 from which the coating (when provided) extends.

The metal layers 5, 6 are fastened to each other preferably by means of welding, i.e., the metal layers 5, 6 are welded to each other.

The metal layers 5, 6 are fixed to each other, preferably at the periphery thereof. In particular, the edge portion, preferably, the entire peripheral portion, of the metal layer 5 is fixed to the peripheral portion, preferably, to the entire peripheral portion, of the metal layer 6.

When the two metal layers 5, 6 are fixed to each other, for example welded to each other, the peripheral portion of the metal layer 5 is in contact, in particular directly in contact, with the peripheral portion of the metal layer 6.

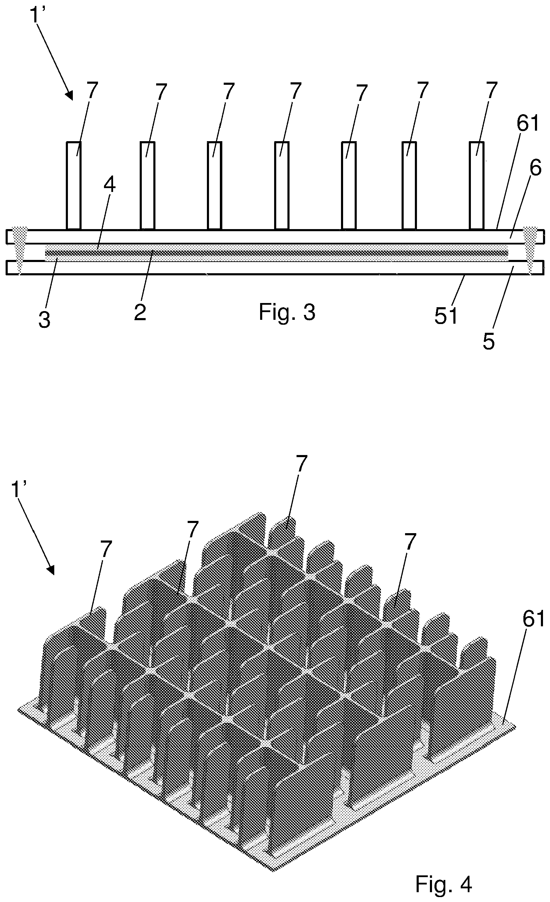

Note that in Figures 1 and 3 the fastening between the two metal layers 5, 6 is only diagrammatically represented.

The metal layers 5, 6 may be, for example, two distinct elements, for example two sheets or two foils, which are joined to each other, for example, by means of welding; or the metal layers may be part of a same element, for example, a sheet or a foil, which is folded so as to form the two metal layers, which are welded to each other at the periphery.

Preferably, each metal layer 5, 6 has a thickness of from 0.5 to 4 mm.

The electric heater 1, 1', in all embodiments, is provided with a plurality of metal flaps 7 which extend transversely, for example, orthogonally, from an external face of at least one metal layer, for example, of only one or of both, of said two metal layers 5, 6.

With particular reference to Figures 3 and 4, a particular example of heater 1' is provided with a plurality of metal flaps 7 which extend transversely, for example, orthogonally, from the external face 61 of the metal layer 6. Preferably, only one of the metal layers 5, 6, for example, the metal layer 6, is provided with the flaps 7. Preferably, the metal flaps 7 are integral with the metal layer, for example, the metal layer 6, from which they extend, and are made of the same material as the metal layer from which they extend. In other words, it is preferable that the flaps 7 and the metal layer from which they extend form a single monolithic component, made, for example, by means of die-casting or by means of extrusion.

The flaps 7 advantageously allow a better transmission of the heat to the substance to be heated. The flaps 7 are particularly useful when the substance is frozen, since they penetrate the frozen mass, in particular the frozen solid mass. Also the metal flaps 7 are provided with the external coating with which the metal layer from which they extend is optionally provided.

In particular, preferably, substantially the entire surface, in particular the external surface, of each flap 7 is covered by said coating. The thickness of the coating, or coating layer of the flaps 7 is from 3 to 50 µm, and preferably it is equal to or substantially equal to the thickness of the coating of the metal layer from which they extend.

Preferably, each flap 7 has a height, starting from the metal layer from which it extends, of from 5 to 100 mm.

Preferably, the number of flaps is from 2 to 30.

For the electric heater indicated with reference numeral 1, the flaps with which the metal layer 5 is optionally provided and/or with which the metal layer 6 is optionally provided are not shown.

Preferably, the electric heater 1, 1' has a thickness t1 of from 2 to 10 mm; said thickness t1 being defined by the distance between the external faces 51, 61, opposite to each other, of the two metal layers 5, 6. The electric heater 1 is therefore advantageously very thin. The flaps 7 preferably have a thickness, or height, which is greater with respect to said thickness t1.

The thickness t1 is preferably smaller, in particular, much smaller, with respect to the width and the length of the electric heater 1, 1'.

An example of a process for obtaining an electric heater 1, 1' comprises the steps of:
a) arranging the two polymeric layers 3, 4 and the metal sheet 2 between the two metal layers 5, 6;
b) fixing, in particular sealing, the two metal layers 5, 6 hermetically to each other. The two polymeric layers 3, 4 and the metal sheet 2 preferably form a preassembled component.

The two metal layers 5, 6, as already mentioned, are preferably fixed to each other by means of welding, preferably by means of laser welding.

Laser welding is particularly advantageous, since it may be performed quickly and may be performed at relatively low temperatures and is therefore compatible with materials such as Aluminum or Aluminum alloys. In particular, laser welding allows not to deform the metal layers 5, 6 which may also be made with thin thickness. Furthermore, laser welding allows to avoid unwanted overheating of the polymeric layers 3, 4 arranged between the two metal layers 5, 6.

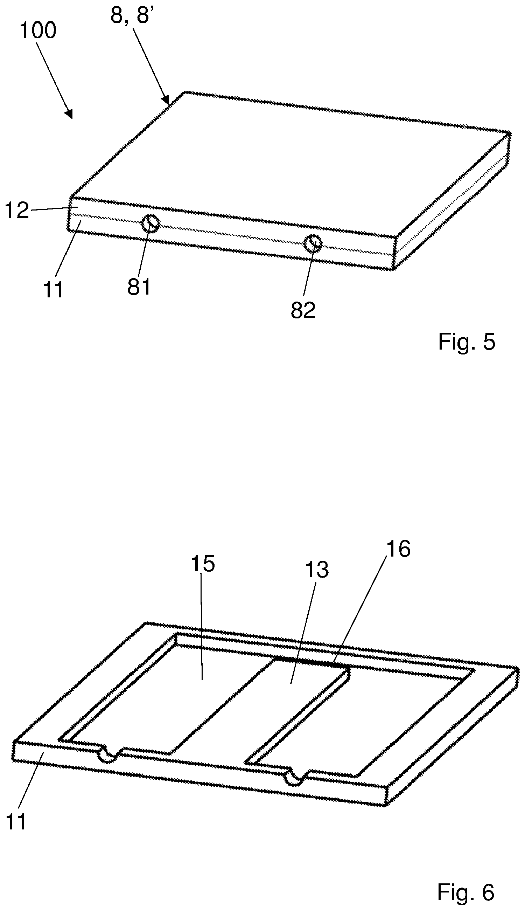

The invention also relates to a device (Figure 5, 6, 7 and 8) for heating a liquid or a frozen substance in a motor vehicle, in particular for the heating of electric car batteries or for an HVAC system or for a system for reducing the environmental pollution of the motor vehicle.

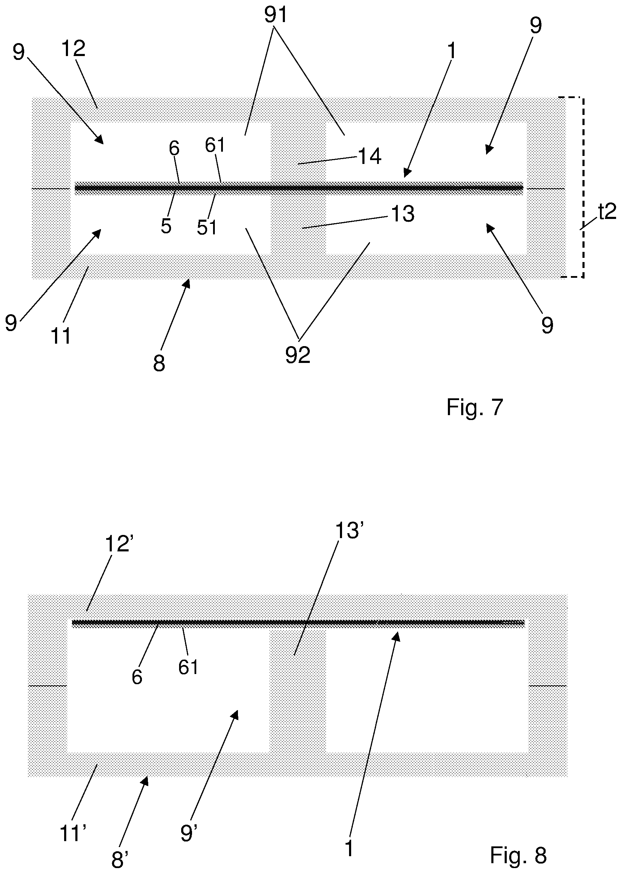

The device 100 comprising a body 8, 8' which delimits an environment 9, 9' adapted to receive a substance, for example, the liquid, to be heated; and an electric heater 1, 1' (in Figures 7 and 8 an electric heater 1 is shown by way of example) arranged in said environment 9, 9'.

Preferably, said environment 9, 9' has an overall volume of from 0.5 to 30 liters, preferably of from 0.5 to 5 liters or of from 12 to 24 liters and/or the thickness t2 of the device 100 is from 10 mm to 100 mm, for example, from 15 to 100 mm or from 15 to 50 mm or from 50 to 100 mm; the thickness of the device 100 being smaller than the width and the length thereof.

The body 8, 8' is provided with an inlet opening 81 and with an outlet opening 82 for the liquid.

The body 8, 8' is made, for example, of metal or plastic.

The electric heater 1, 1' is arranged in the body 8, 8' so that at least one of the two metal layers 5, 6 is adapted to come into contact with the liquid.

Preferably, the surfaces of greatest extension of the electric heater 1, in particular, the faces 51, 61, are substantially parallel to the surfaces of greatest extension of the body 8, 8'.

The body 8, 8' comprises or consists of two shells 11, 12, 11', 12', fixed to each other, in particular, hermetically sealed to each other, which delimit said environment 9, 9'.

Preferably, at least one of the two shells, for example, at least the shell 11, 11', is provided with a recessed region 15, adapted to receive the liquid, from the bottom of which a protrusion 13, 13' projects, in particular an internal protrusion. The recessed region 15 comprises a part proximal to the inlet opening 81 and a part proximal to the outlet opening 82, communicating with each other by means of a passage 16, preferably, a narrowing, partially delimited by the protrusion 13, 13'. Thereby, the duration the liquid to be heated remains in the body 8, 8' is increased, thus obtaining a greater heating of the liquid.

With particular reference to Figure 7, the electric heater 1 may be arranged in the body 8 so as to divide said environment 9 into two areas 91, 92, whereby both metal layers 5, 6 of the electric heater 1 are adapted to come into contact with the liquid. In other words, the electric heater 1 forms a divider in the body 8, arranged between the two shells 11, 12. Thereby, a highly efficient heat transmission is obtained from the heater 1 to the liquid to be heated, which may come into contact with both metal layers 5, 6.

A plurality of flaps 7 (not shown in Figure 7) extend from the face 51 and/or a plurality of flaps 7 (not shown in Figure 7) extend from the face 61.

Preferably, each shell 11, 12 is provided with at least one respective protrusion 13, 14, facing each other, between which the electric heater 1 is arranged. The electric heater 1 is, in particular, blocked by the two protrusions 13, 14. Thereby, the contact between the electric heater 1 and the body 8 is minimized, and therefore the heat transmission from the heater 1 to the body 8 is minimized, while the efficiency of the heat transmission to the liquid is increased. Preferably, each protrusion 13, 14 comprises a flat face where the electric heater 1 is arranged. With particular reference to Figure 8, the electric heater 1 is arranged in the body 8' so that only one of the two metal layers 6 is adapted to come into contact with the liquid.

For example, the shell 12' comprises a bottom surface, preferably substantially flat, in which the electric heater 1 is arranged. For example, the metal layer 5 of the electric heater 1 is fixed to the bottom surface of the shell 12'. Substantially, the shell 12' is a lid. Preferably, a thermally insulating layer is interposed between the shell 12' and the electric heater 1, so as to limit the absorption of heat by the shell 12' and therefore increase the efficiency of the heat exchange with the liquid. The protrusion 13' of the shell 11' has a height which is greater with respect to the peripheral edge of the shell 11', and the electrical heater 1 is arranged between the protrusion 13', in particular, on a flat surface of the protrusion 13', and the bottom surface of the shell 12'.

A plurality of flaps 7 (not shown in Figure 8) extend from the face 61; preferably only the metal layer 6 is provided with said flaps 7.

## Claims

1. An electric heater (1, 1') for heating a liquid or frozen substance in a motor vehicle;
the electric heater (1, 1') comprising:
- a metal sheet (2) adapted to generate heat when it is crossed by an electric current;
- two polymeric layers (3, 4) between which the metal sheet (2) is arranged;
- two metal layers (5, 6), between which the two polymeric layers (3, 4) are arranged;
wherein the two metal layers (5, 6) are hermetically sealed to each other, defining a casing which prevents the substance to be heated from coming into contact with the two polymeric layers (3, 4) and with the metal sheet (2);
**characterized in that** there is provided a plurality of metal flaps (7) extending transversely from an external face (61) of at least one metal layer (6) of said two metal layers (5, 6);
**in that** at least one metal layer of said two metal layers (5, 6) is provided with an external coating, said external coating being made of a material different with respect to said at least one metal layer;
**in that** said external coating is made of a material comprising or consisting of PTFE (polytetrafluoroethylene);
**in that** said external coating has a thickness of from 3 to 50 µm;
and **in that** said metal flaps (7) are provided with said external coating.

2. An electric heater (1, 1') according to claim 1, wherein said metal flaps (7) are integral with the metal layer (6) from which they extend and are made of the same material as the metal layer (6) from which they extend.

3. An electric heater (1, 1') according to claim 1 or 2, wherein the two polymeric layers (3, 4) and/or the two metal layers (5, 6) are substantially flat.

4. An electric heater (1, 1') according to any one of the preceding claims, wherein the metal sheet (2) adheres to the two polymeric layers (3, 4); and/or wherein each polymeric layer of said two polymeric layers (3, 4) adheres to a respective metal layer of said two metal layers (5, 6).

5. An electric heater (1, 1') according to any one of the preceding claims, wherein said external coating is adapted to protect said at least one metal layer from a chemical interaction with the substance to be heated.

6. An electric heater (1, 1') according to any one of the preceding claims, wherein at least one surface of the metal sheet (2) is coated with an electrically conductive layer having a positive temperature coefficient.

7. An electric heater (1, 1') according to any one of the preceding claims, having a thickness (t1) of from 2 to 10 mm.

8. An electric heater (1, 1') according to any one of the preceding claims, wherein said two metal layers (5, 6) are made of a material comprising or consisting of Aluminum or Copper.

9. A device (100) for heating a liquid or frozen substance in a motor vehicle;
the device (100) comprising a body (8, 8') delimiting an environment (9, 9') adapted to receive the substance to be heated; and an electric heater (1, 1') according to any one of claims 1 to 8, arranged in said environment (9, 9').

10. A device (100) according to claim 9, wherein said environment (9, 9') has an overall volume of from 0.5 to 30 liters.

11. A device (100) according to claim 10, wherein said overall volume is from 0.5 to 5 liters or from 12 to 24 liters.

12. A process for obtaining an electric heater (1, 1') according to any one of claims 1 to 8, comprising the steps of:
a) arranging the two polymeric layers (3, 4) and the metal sheet (2) between the two metal layers (5, 6);
b) hermetically sealing the two metal layers (5, 6) to each other.

13. A process according to claim 12, wherein the two metal layers (5, 6) are hermetically sealed to each other by means of welding.

14. A process according to claim 13, wherein the two metal layers (5, 6) are hermetically sealed to each other by means of laser welding.

## Patentansprüche

1. Elektrische Heizung (1, 1') zum Erhitzen einer flüssigen oder gefrorenen Substanz in einem Kraftfahrzeug;
wobei die elektrische Heizung (1, 1') aufweist:
- ein Metallblech (2), das geeignet ist, Wärme zu erzeugen, wenn es von einem elektrischen Strom durchflossen wird;
- zwei Polymerschichten (3, 4), zwischen denen das Metallblech (2) angeordnet ist;
- zwei Metallschichten (5, 6), zwischen denen die beiden Polymerschichten (3, 4) angeordnet sind;
wobei die beiden Metallschichten (5, 6) hermetisch gegeneinander abgedichtet sind und eine Umhüllung bilden, die verhindert, dass die zu erhitzende Substanz mit den beiden Polymerschichten (3, 4) und mit dem Metallblech (2) in Kontakt kommt;
**dadurch gekennzeichnet, dass** eine Vielzahl von Metallklappen (7) vorgesehen ist, die sich quer von einer Außenfläche (61) mindestens einer Metallschicht (6) der beiden Metallschichten (5, 6) erstrecken;
dass mindestens eine Metallschicht der beiden Metallschichten (5, 6) mit einer äußeren Beschichtung versehen ist, wobei die äußere Beschichtung aus einem Material besteht, das sich von dem der mindestens einen Metallschicht unterscheidet;
dass die äußere Beschichtung aus einem Material besteht, das PTFE (Polytetrafluorethylen) aufweist oder daraus besteht;
dass diese äußere Beschichtung eine Dicke von 3 bis 50 pm aufweist;
und dadurch, dass die Metallklappen (7) mit der genannten äußeren Beschichtung versehen sind.

2. Elektrische Heizung (1, 1') nach Anspruch 1, wobei die Metallklappen (7) mit der Metallschicht (6), von der sie ausgehen, einstückig sind und aus dem gleichen Material bestehen wie die Metallschicht (6), von der sie ausgehen.

3. Elektrische Heizung (1, 1') nach Anspruch 1 oder 2, wobei die beiden Polymerschichten (3, 4) und/oder die beiden Metallschichten (5, 6) im Wesentlichen flach sind.

4. Elektrische Heizung (1, 1') nach einem der vorhergehenden Ansprüche, wobei das Metallblech (2) an den beiden Polymerschichten (3, 4) haftet; und/oder wobei jede Polymerschicht der beiden Polymerschichten (3, 4) an einer entsprechenden Metallschicht der beiden Metallschichten (5, 6) haftet.

5. Elektrische Heizung (1, 1') nach einem der vorhergehenden Ansprüche, **dadurch gekennzeichnet, dass** die äußere Beschichtung geeignet ist, die mindestens eine Metallschicht vor einer chemischen Wechselwirkung mit der zu erhitzenden Substanz zu schützen.

6. Elektrische Heizung (1, 1') nach einem der vorhergehenden Ansprüche, wobei mindestens eine Oberfläche des Blechs (2) mit einer elektrisch leitfähigen Schicht mit einem positiven Temperaturkoeffizienten beschichtet ist.

7. Elektrische Heizung (1, 1') nach einem der vorhergehenden Ansprüche mit einer Dicke (t1) von 2 bis 10 mm.

8. Elektrische Heizung (1, 1') nach einem der vorhergehenden Ansprüche, wobei die beiden Metallschichten (5, 6) aus einem Material hergestellt sind, das Aluminium oder Kupfer aufweist oder daraus besteht.

9. Eine Vorrichtung (100) zum Erhitzen einer flüssigen oder gefrorenen Substanz in einem Kraftfahrzeug;
wobei die Vorrichtung (100) einen Körper (8, 8') aufweist, der eine Umgebung (9, 9') begrenzt, die geeignet ist, die zu erwärmende Substanz aufzunehmen; und eine elektrische Heizung (1, 1') nach einem der Ansprüche 1 bis 8, das in der genannten Umgebung (9, 9') angeordnet ist.

10. Eine Vorrichtung (100) nach Anspruch 9, wobei die Umgebung (9, 9') ein Gesamtvolumen von 0,5 bis 30 Litern aufweist.

11. Eine Vorrichtung (100) nach Anspruch 10, wobei das Gesamtvolumen von 0,5 bis 5 Litern oder von 12 bis 24 Litern beträgt.

12. Ein Verfahren zur Herstellung eines elektrischen Heizgeräts (1, 1') nach einem der Ansprüche 1 bis 8, aufweisend die folgenden Schritte:
a) Anordnen der beiden Polymerschichten (3, 4) und des Metallblechs (2) zwischen den beiden Metallschichten (5, 6);
b) hermetisches Versiegeln der beiden Metallschichten (5, 6) miteinander.

13. Ein Verfahren nach Anspruch 12, wobei die beiden Metallschichten (5, 6) durch Schweißen hermetisch miteinander versiegelt werden.

14. Ein Verfahren nach Anspruch 13, wobei die beiden Metallschichten (5, 6) durch Laserschweißen hermetisch miteinander versiegelt werden.

## Revendications

1. Chauffage électrique (1, 1') pour chauffer un liquide ou une substance congelée dans un véhicule automobile ;
le chauffage électrique (1, 1') comprenant :
- une feuille métallique (2) destinée à générer de la chaleur lorsqu'elle est traversée par un courant électrique ;
- deux couches polymères (3, 4) entre lesquelles la feuille métallique (2) est disposée ;
- deux couches métalliques (5, 6), entre lesquelles sont disposées les deux couches polymères (3, 4) ;
dans lequel les deux couches métalliques (5, 6) sont hermétiquement scellées l'une à l'autre, définissant une enveloppe qui empêche la substance à chauffer d'entrer en contact avec les deux couches polymères (3, 4) et avec la feuille métallique (2) ;
**caractérisé en ce qu'**une pluralité de rabats métalliques (7) est prévue s'étendant transversalement à partir d'une face externe (61) d'au moins une couche métallique (6) desdites deux couches métalliques (5, 6) ;
**en ce qu'**au moins une couche métallique desdites deux couches métalliques (5, 6) est pourvue d'un revêtement externe, ledit revêtement externe étant constitué d'un matériau différent de celui de ladite au moins une couche métallique ;
**en ce que** ledit revêtement externe est constitué d'un matériau comprenant du PTFE (polytétrafluoroéthylène) ou consistant en celui-ci ;
**en ce que** ledit revêtement externe a une épaisseur de 3 à 50 µm ;
et **en ce que** lesdits rabats métalliques (7) sont pourvus d'un revêtement externe.

2. Chauffage électrique (1, 1') selon la revendication 1, dans lequel lesdits rabats métalliques (7) sont solidaires de la couche métallique (6) à partir de laquelle ils s'étendent et sont constitués du même matériau que la couche métallique (6) à partir de laquelle ils s'étendent.

3. Chauffage électrique (1, 1') selon la revendication 1 ou 2, dans lequel les deux couches polymères (3, 4) et/ou les deux couches métalliques (5, 6) sont sensiblement plates.

4. Chauffage électrique (1, 1') selon l'une quelconque des revendications précédentes, dans lequel la feuille métallique (2) adhère aux deux couches polymères (3, 4) ; et/ou dans lequel chaque couche polymère desdites deux couches polymères (3, 4) adhère à une couche métallique respective desdites deux couches métalliques (5, 6).

5. Chauffage électrique (1, 1') selon l'une quelconque des revendications précédentes, dans lequel ledit revêtement externe est adapté pour protéger ladite au moins une couche métallique d'une interaction chimique avec la substance à chauffer.

6. Chauffage électrique (1, 1') selon l'une quelconque des revendications précédentes, dans lequel au moins une surface de la feuille métallique (2) est recouverte d'une couche électriquement conductrice ayant un coefficient de température positif.

7. Chauffage électrique (1, 1') selon l'une quelconque des revendications précédentes, ayant une épaisseur (t1) de 2 à 10 mm.

8. Chauffage électrique (1, 1') selon l'une quelconque des revendications précédentes, dans lequel lesdites deux couches métalliques (5, 6) sont constituées d'un matériau comprenant ou consistant en aluminium ou en cuivre.

9. Dispositif (100) pour chauffer un liquide ou une substance congelée dans un véhicule automobile ;
le dispositif (100) comprenant un corps (8, 8') délimitant un environnement (9, 9') destiné à recevoir la substance à chauffer ; et un chauffage électrique (1, 1') selon l'une quelconque des revendications 1 à 8, disposé dans ledit environnement (9, 9').

10. Dispositif (100) selon la revendication 9, dans lequel ledit environnement (9, 9') a un volume global de 0,5 à 30 litres.

11. Dispositif (100) selon la revendication 10, dans lequel ledit volume global est compris entre 0,5 et 5 litres ou entre 12 et 24 litres.

12. Procédé d'obtention d'un chauffage électrique (1, 1') selon l'une quelconque des revendications 1 à 8, comprenant les étapes suivantes :
a) disposer les deux couches polymères (3, 4) et la feuille métallique (2) entre les deux couches métalliques (5, 6) ;
b) sceller hermétiquement les deux couches métalliques (5, 6) l'une à l'autre.

13. Procédé selon la revendication 12, dans lequel les deux couches métalliques (5, 6) sont hermétiquement scellées l'une à l'autre par soudage.

14. Procédé selon la revendication 13, dans lequel les deux couches métalliques (5, 6) sont hermétiquement scellées l'une à l'autre par soudage au laser.
